# EUROPÄISCHE PATENTSCHRIFT

(11) **EP 4 460 555 B1**
(45) Veröffentlichungstag und Bekanntmachung des Hinweises auf die Patenterteilung: **29.10.2025**
(21) Anmeldenummer: 22835231.6
(22) Anmeldetag: 08.12.2022
(51) Int. Cl.: C11D 3/37, C11D 11/00, C11D 3/00

(54) **FARBSCHÜTZENDE WASCHMITTEL**
COLOR-PROTECTING DETERGENTS
DÉTERGENTS DESTINÉS À LA PROTECTION DES COULEURS

(30) Priorität: 06.01.2022 DE 102022200097
(43) Veröffentlichungstag der Anmeldung: 13.11.2024
(73) Patentinhaber: Henkel AG & Co. KGaA, 40589 Düsseldorf (DE)
(72) Erfinder: NEUBAUER, Kira, 42115 Wuppertal (DE); KROPF, Christian, 40724 Hilden (DE); MAHNKE, Janice, 42113 Wuppertal (DE); FALENSKI, Laura, 41466 Neuss (DE)
(86) Internationale Anmeldenummer: PCT/EP2022/084888
(87) Internationale Veröffentlichungsnummer: WO 2023/131461

(56) Entgegenhaltungen:
- CHANDA SANANDA ET AL: "Poly(alkylene itaconate)s - An interesting class of polyesters with periodically located exo-chain double bonds susceptible to Michael addition", POLYMER CHEMISTRY, ROYAL SOCIETY OF CHEMISTRY, CAMBRIDGE, vol. 6, no. 11, 21 March 2015 (2015-03-21), pages 2108 - 2114, XP002806602, ISSN: 1759-9954, DOI: 10.1039/C4PY01613K
- GUARNERI ALICE ET AL: "Functionalization of Enzymatically Synthesized Rigid Poly(itaconate)s via Post-Polymerization Aza-Michael Addition of Primary Amines", ADVANCED SYNTHESIS AND CATALYSIS, 12 April 2019 (2019-04-12), XP093025762, ISSN: 1615-4150, Retrieved from the Internet <URL:https://onlinelibrary.wiley.com/doi/full-xml/10.1002/adsc.201900055> DOI: 10.1002/adsc.201900055
- BOARDMAN SASKIA J. ET AL: "Polymers for dye transfer inhibition in laundry applications", JOURNAL OF APPLIED POLYMER SCIENCE, vol. 138, no. 1, 9 July 2020 (2020-07-09), US, pages 49632, XP093025800, ISSN: 0021-8995, Retrieved from the Internet <URL:https://onlinelibrary.wiley.com/doi/full-xml/10.1002/app.49632> DOI: 10.1002/app.49632

## Beschreibung

Die vorliegende Erfindung betrifft die Verwendung bestimmter polyesterbasierter Kammpolymere als farbübertragungsinhibierende Wirkstoffe beim Waschen von Textilien und Waschmittel, welche derartige Wirkstoffe enthalten.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Enzyme umfassen. Zu derartigen Hilfsstoffen gehören auch Substanzen, welche verhindern sollen, dass gefärbte Textilien nach der Wäsche einen veränderten Farbeindruck hervorrufen. Diese Farbeindrucksveränderung gewaschener, d.h. sauberer, Textilien kann zum einen darauf beruhen, dass Farbstoffanteile durch den Waschprozess vom Textil entfernt werden ("Verblassen"), zum anderen können sich von andersfarbigen Textilien abgelöste Farbstoffe auf dem Textil niederschlagen ("Verfärben"). Der Verfärbungsaspekt kann auch bei ungefärbten Wäschestücken eine Rolle spielen, wenn diese zusammen mit farbigen Wäschestücken gewaschen werden. Um diese unerwünschten Nebeneffekte des Entfernens von Schmutz von Textilien durch Behandeln mit üblicherweise tensidhaltigen wässrigen Systemen zu vermeiden, enthalten Waschmittel, insbesondere wenn sie als sogenannte Color- oder Buntwaschmittel zum Waschen farbiger Textilien vorgesehen sind, Wirkstoffe, die das Ablösen von Farbstoffen vom Textil verhindern oder zumindest das Ablagern von abgelösten, in der Waschflotte befindlichen Farbstoffen auf Textilien vermeiden sollen. Viele der üblicherweise zum Einsatz kommenden Polymere haben eine derart hohe Affinität zu Farbstoffen, dass sie diese verstärkt von der gefärbten Faser ziehen, so dass es zu verstärkten Farbverlusten kommt.

Bekannte Farbübertragungsinhibitoren sind beispielsweise Polymere aus Vinylpyrrolidon, Vinylimidazol, Vinylpyridin-N-Oxid oder Copolymere aus diesen. Aus den internationalen Patentanmeldungen WO 2008/110469 A1 und WO 2007/019981 A1 sind die farbübertragungsinhibierenden Eigenschaften bestimmter Triazin-Derivate bekannt. WO2004/048506 A1 offenbart einen Farbübertragungsinhibitor enthaltend Addukte von 2-Acrylamido-2-Methylpropansulfonsäure (AMPS) an 4-Vinylpyridin.

Überraschend wurde gefunden, dass Aza-Michael-Additionsprodukte von primären Aminen an Oligoester aus mono- oder diethylenisch ungesättigten Dicarbonsäuren und Diolen im Waschprozess einen positiven Effekt auf die Farbübertragung haben und eine Anfärbung ungefärbter Textilien verhindern.

Aus D. M. Lynn, R. Langer, J. Am. Chem. Soc. 2000, 122, 10761-10768; D. M. Lynn, D.G. Anderson, D. Putnam, R. Langer, J. Am. Chem. Soc. 2001, 123, 8155-8156; J. Shen, S.-W. Huang, M. Liu, R.-X. Zhou, Polymer48 (2007) 675-681; V. V. Filipovic, B. D. Nedeljkovic, M. Vukomanivic, S. Lj. Tomic, Polymer Testing 68 (2018) 270-278; und der Patentschrift US 9 458 299 B1 ist die Aza-Michael-Addition bekannt. Ihre Anwendung auf ungesättigte Dicarbonsäuren ist in G. J. Noordzij, C. H. R. M. Wilsens, Frontiers in Chemistry, November 2019, Volume 7, Article 729 beschrieben. Michael-Additionen an Polyester ungesättigter Polycarbonsäuren sind in T. J. Farmer, J. H. Clark, D. J. Macquarrie, J. K. Ogunjobi. R. L. Castle, Polym. Chem., 2016, 7, 1650-1658 beschrieben.

Gegenstand der Erfindung ist die Verwendung von polyesterbasierten Kammpolymeren, erhältlich durch Aza-Michael-Addition von primären Aminen an Oligoester aus mono- oder diethylenisch ungesättigten Dicarbonsäuren und Diolen, zur Vermeidung der Übertragung von Textilfarbstoffen von gefärbten Textilien auf ungefärbte oder andersfarbige Textilien bei deren gemeinsamer Wäsche in insbesondere tensidhaltigen wässrigen Lösungen.

Als primäre Amine werden insbesondere solche der allgemeinen Formel H₂N-R³-R⁴ ausgewählt, in denen R³ für -(CR¹R²)ₙ- steht, in denen unabhängig voneinander R¹ und R² für H oder einen C₁-C₁₂-Alkylrest und n für eine Zahl von 0 bis 10, vorzugsweise 1 bis 4, und R⁴ für einen Heterocyclus, insbesondere einen N-haltigen Heterocyclus, stehen. Wenn Mischungen von Aminen eingesetzt werden, können jeweils verschiedene R¹, R², R³ und R⁴ gemeinsam nebeneinander vorliegen und kann n auch nicht ganzzahlige Werte annehmen. R⁴ ist vorzugsweise ein Pyrrolidon-, Imidazol- oder Pyridin-N-oxid-Rest oder eine Mischung aus diesen.

In den ungesättigten Dicarbonsäuren können die Doppelbindungen in E- oder Z-Konfiguration vorliegen. Bevorzugte mono- oder diethylenisch ungesättigte Dicarbonsäuren sind Maleinsäure, Fumarsäure, Itaconsäure, Mesaconsäure, Citraconsäure, Muconsäure und deren Mischungen. Vorzugsweise werden monoethylenisch ungesättigte Dicarbonsäuren eingesetzt.

Bevorzugte Diole werden aus denen der allgemeinen Formel HO-A-OH ausgewählt, in der A für - (CR¹R²)ₘ- oder -((CR⁶R⁷)ₚ-O-(CR⁶R⁷)_{q})ₙ- steht, in denen unabhängig voneinander R¹ und R² für H oder einen C₁-C₁₂-Alkylrest, R⁶ und R⁷ für H oder einen C₁-C₃-Alkylrest, m für eine Zahl von 2 bis 10, n für eine Zahl von 1 bis 30 und unabhängig voneinander p und q für Zahlen von 2 bis 4 stehen, wobei m, n, p und q bei Einsatz von Diol-Mischungen auch nicht-ganzzahlige Werte aufweisen können und jeweils verschiedene R¹, R², R⁶ und R⁷ gemeinsam nebeneinander vorliegen können. R¹ und/oder R² ist vorzugsweise H oder ein Alkylrest mit 1 bis 3 C-Atomen. Vorzugsweise ist m eine Zahl im Bereich von 2 bis 4, und/oder n eine Zahl im Bereich von 2 bis 4.

Die genannten Dicarbonsäuren und die genannten Diole können nach bekannten Verfahren miteinander verestert werden, wobei vorzugsweise equimolare Mengen an Dicarbonsäure und Diol eingesetzt werden, so dass der resultierende Oligoester im Durchschnitt gleich viele Carbonsäure-Endgruppen wie Hydroxyl-Endgruppen aufweist. Es ist jedoch auch möglich, mehr als equimolare Mengen an Dicarbonsäure oder an Diol einzusetzen, so dass sich der durchschnittliche Anteil der Carbonsäure-Endgruppen oder der Hydroxyl-Endgruppen im resultierenden Oligoester erhöht und im Extremfall bei 100 % liegt. Der Oligomerisationsgrad z in den Oligoestern liegt vorzugsweise im Bereich von 2 bis 30 und noch bevorzugter von 5 bis 15 und kann als analytisch zu ermittelnde Größe auch nicht ganzzahlige Werte annehmen.

An die Ester können nach den oben zitierten literaturbekannten Vorschriften oder in Anlehnung an diese die genannten primären Amine addiert werden. Bei Einsatz von Itaconsäure (R⁵ = CH₂) oder Maleinsäure (R⁵ = direkte Bindung) erhält man beispielsweise polyesterbasierte Kammpolymere der allgemeinen Formel 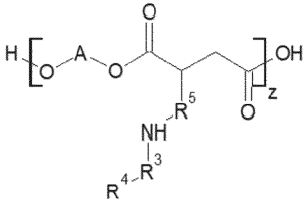 worin R³, R⁴, A und z die oben angegebenen Bedeutungen haben. Bei gleichzeitigem Einsatz von verschieden substituierten primären Aminen, beispielsweise Aminoalkylpyrrolidon- und Aminoalkylimidazol-Verbindungen, in der 1,4-Addition lassen sich Zielverbindungen erhalten, in denen die Substitutionseinheiten, beispielsweise die Aminoalkylpyrrolidon- und die Aminoalkylimidazolreste, in statistischer Verteilung vorliegen.

Die so erhältlichen Wirkstoffe leisten bei beiden zuvor angesprochenen Aspekten der Farbkonstanz einen Beitrag, das heißt sie vermindern sowohl das Verfärben wie auch die Verblassung, wenn auch der Effekt der Verhinderung des Anfärbens, insbesondere beim Waschen weißer Textilien, am ausgeprägtesten ist. Ein weiterer Gegenstand der Erfindung ist daher die Verwendung von so erhältlichen Wirkstoffen zur Vermeidung der Veränderung des Farbeindrucks von gefärbten Textilien, vorzugsweise solchen, die aus Baumwolle bestehen oder Baumwolle enthalten, bei deren Wäsche in insbesondere tensidhaltigen wässrigen Lösungen. Unter der Veränderung des Farbeindrucks ist dabei nicht der Unterschied zwischen verschmutztem und sauberem Textil zu verstehen, sondern der Unterschied zwischen jeweils sauberem Textil vor und nach dem Waschvorgang. Ein weiterer Gegenstand der Erfindung ist daher ein Waschmittel, das Tensid sowie weitere übliche Inhaltsstoffe von Waschmitteln und ein oben definiertes polyesterbasiertes Kammpolymer in farbübertragungsinhibierender Menge enthält. Unter einer farbübertragungsinhibierenden Menge soll dabei eine Menge verstanden werden, welche den Übertrag von Farbstoffen von gefärbten Textilien auf ungefärbte oder andersfarbige Textilien bei deren gemeinsamer Wäsche im Vergleich zu ansonsten gleichen Bedingungen bei Abwesenheit des Wirkstoffs signifikant erniedrigt. Die genannten farbübertragungsinhibierenden Wirkstoffe werden in Mengen von 0,01 Gew.-% bis 5 Gew.-%, insbesondere von 0,05 Gew.-% bis 1 Gew.-%, in Waschmitteln eingesetzt.

Ein weiterer Gegenstand der Erfindung ist ein Verfahren zum Waschen von weißen oder gefärbten Textilien in tensidhaltigen wässrigen Lösungen in Gegenwart von andersfarbigen Textilien, welches dadurch gekennzeichnet ist, dass man eine tensidhaltige wässrige Flotte einsetzt, die ein oben definiertes polyesterbasiertes Kammpolymer enthält. In einem solchen Verfahren ist es möglich, zusammen mit dem gefärbten Textil auch weiße beziehungsweise ungefärbte Textilien zu waschen, ohne dass das weiße beziehungsweise ungefärbte Textil angefärbt wird. Vorzugsweise setzt man 0,0003 g/l bis 0,16 g/l, insbesondere 0,0015 g/l bis 0,03 g/l des oben definierten polyesterbasierten Kammpolymers in der wässrigen Flotte ein.

Ein Waschmittel kann neben dem genannten Farbübertragungsinhibitor übliche mit diesem Bestandteil verträgliche Inhaltsstoffe enthalten. So kann es beispielsweise zusätzlich noch einen weiteren Farbübertragungsinhibitor, diesen dann vorzugsweise in Mengen von 0,1 Gew.-% bis 2 Gew.-%, insbesondere 0,2 Gew.-% bis 1 Gew.-%, enthalten, der in einer bevorzugten Ausgestaltung ausgewählt wird aus den Polymeren aus Vinylpyrrolidon, Vinylimidazol, Vinylpyridin-N-Oxid oder den Copolymeren aus diesen. Brauchbar sind sowohl Polyvinylpyrrolidone mit Molgewichten von 15 000 bis 50 000 wie auch Polyvinylpyrrolidone mit höheren Molgewichten von beispielsweise bis zu über 1 000 000, insbesondere von 1 500 000 bis 4 000 000, N-Vinylimidazol/N-Vinylpyrrolidon-Copolymere, Polyvinyloxazolidone, Copolymere auf Basis von Vinylmonomeren und Carbonsäureamiden, pyrrolidongruppenhaltige Polyester und Polyamide, gepfropfte Polyamidoamine und Polyethylenimine, Polyamin-N-Oxid-Polymere, Polyvinylalkohole und Copolymere auf Basis von Acrylamidoalkenylsulfonsäuren. Eingesetzt werden können aber auch enzymatische Systeme, umfassend eine Peroxidase und Wasserstoffperoxid beziehungsweise eine in Wasser Wasserstoffperoxid-liefernde Substanz. Der Zusatz einer Mediatorverbindung für die Peroxidase, zum Beispiel eines Acetosyringons, eines Phenolderivats oder eines Phenotiazins oder Phenoxazins, ist in diesem Fall bevorzugt, wobei auch zusätzlich obengenannte polymere Farbübertragungsinhibitorwirkstoffe eingesetzt werden können. Polyvinylpyrrolidon weist zum Einsatz in erfindungsgemäßen Mitteln vorzugsweise eine durchschnittliche (Gewichtsmittel) Molmasse im Bereich von 10 000 bis 60 000, insbesondere im Bereich von 25 000 bis 50 000 auf. Unter den Copolymeren sind solche aus Vinylpyrrolidon und Vinylimidazol im Molverhältnis 5:1 bis 1:1 mit einer durchschnittlichen (Gewichtsmittel) Molmasse im Bereich von 5 000 bis 50 000, insbesondere 10 000 bis 20 000 bevorzugt.

Waschmittel, die als insbesondere pulverförmige Feststoffe, in nachverdichteter Teilchenform, als homogene Lösungen oder Suspensionen vorliegen können, können außer dem erfindungsgemäß eingesetzten Wirkstoff im Prinzip alle bekannten und in derartigen Mitteln üblichen Inhaltsstoffe enthalten. Die erfindungsgemäßen Mittel enthalten Inhaltsstoffe ausgewählt aus Buildersubstanzen, oberflächenaktive Tenside, Bleichmittel auf Basis organischer und/oder anorganischer Persauerstoffverbindungen, Bleichaktivatoren, wassermischbare organische Lösungsmittel, Enzyme, Sequestrierungsmittel, Elektrolyte, pH-Regulatoren und weitere Hilfsstoffe, wie optische Aufheller, Vergrauungsinhibitoren, Schaumregulatoren sowie Farb- und Duftstoffen.

Die Mittel gemäss der Erfindung enthalten ein Tensid oder mehrere Tenside, wobei insbesondere anionische Tenside, nichtionische Tenside und deren Gemische, aber auch kationische, zwitterionische und amphotere Tenside in Frage kommen.

Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomen im Alkylrest brauchbar.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohole mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind (Talg-) Fettalkohole mit 14 EO, 16 EO, 20 EO, 25 EO, 30 EO oder 40 EO. Insbesondere in Mitteln für den Einsatz in maschinellen Verfahren werden üblicherweise extrem schaumarme Verbindungen eingesetzt. Hierzu zählen vorzugsweise C₁₂-C₁₈-Alkylpolyethylenglykol-polypropylenglykolether mit jeweils bei zu 8 Mol Ethylenoxid- und Propylenoxideinheiten im Molekül. Man kann aber auch andere bekannt schaumarme nichtionische Tenside verwenden, wie zum Beispiel C₁₂-C₁₈-Alkylpolyethylenglykol-polybutylenglykolether mit jeweils bis zu 8 Mol Ethylenoxid- und Butylenoxideinheiten im Molekül sowie endgruppenverschlossene Alkylpolyalkylenglykolmischether. Besonders bevorzugt sind auch die hydroxylgruppenhaltigen alkoxylierten Alkohole, sogenannte Hydroxymischether. Zu den nichtionischen Tensiden zählen auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl - die als analytisch zu bestimmende Größe auch gebrochene Werte annehmen kann - zwischen 1 und 10; vorzugsweise liegt x bei 1,2 bis 1,4. Ebenfalls geeignet sind Polyhydroxyfettsäureamide der Formel IV, in der R¹CO für einen aliphatischen Acylrest mit 6 bis 22 Kohlenstoffatomen, R² für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht:

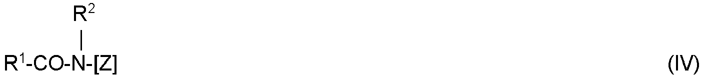

Vorzugsweise leiten sich die Polyhydroxyfettsäureamide von reduzierenden Zuckern mit 5 oder 6 Kohlenstoffatomen, insbesondere von der Glucose ab. Zur Gruppe der Polyhydroxyfettsäureamide gehören auch Verbindungen der Formel (V), 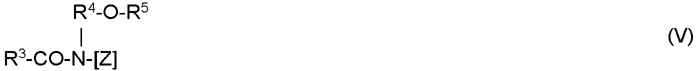 in der R³ für einen linearen oder verzweigten Alkyl- oder Alkenylrest mit 7 bis 12 Kohlenstoffatomen, R⁴ für einen linearen, verzweigten oder cyclischen Alkylenrest oder einen Arylenrest mit 2 bis 8 Kohlenstoffatomen und R⁵ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z] für einen linearen Polyhydroxyalkylrest, dessen Alkylkette mit mindestens zwei Hydroxylgruppen substituiert ist, oder alkoxylierte, vorzugsweise ethoxylierte oder propoxylierte Derivate dieses Restes steht. [Z] wird auch hier vorzugsweise durch reduktive Aminierung eines Zuckers wie Glucose, Fructose, Maltose, Lactose, Galactose, Mannose oder Xylose erhalten. Die N-Alkoxy- oder N-Aryloxy-substituierten Verbindungen können durch Umsetzung mit Fettsäuremethylestern in Gegenwart eines Alkoxids als Katalysator in die gewünschten Polyhydroxyfettsäureamide überführt werden. Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglykosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon. Als weitere Tenside kommen sogenannte Gemini-Tenside in Betracht. Hierunter werden im Allgemeinen solche Verbindungen verstanden, die zwei hydrophile Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, dass die hydrophilen Gruppen einen ausreichenden Abstand haben, damit sie unabhängig voneinander agieren können. Derartige Tenside zeichnen sich im Allgemeinen durch eine ungewöhnlich geringe kritische Micellkonzentration und die Fähigkeit, die Oberflächenspannung des Wassers stark zu reduzieren, aus. In Ausnahmefällen werden unter dem Ausdruck Gemini-Tenside nicht nur derartig "dimere", sondern auch entsprechend "trimere" Tenside verstanden. Geeignete Gemini-Tenside sind beispielsweise sulfatierte Hydroxymischether oder Dimeralkohol-bis- und Trimeralkohol-tris-sulfate und -ethersulfate. Endgruppenverschlossene dimere und trimere Mischether zeichnen sich insbesondere durch ihre Bi- und Multifunktionalität aus. So besitzen die genannten endgruppenverschlossenen Tenside gute Netzeigenschaften und sind dabei schaumarm, so dass sie sich insbesondere für den Einsatz in maschinellen Wasch- oder Reinigungsverfahren eignen. Eingesetzt werden können aber auch Gemini-Polyhydroxyfettsäureamide oder Poly-Polyhydroxyfettsäureamide.

Geeignete anionische Tenside sind insbesondere Seifen und solche, die Sulfat- oder Sulfonat-Gruppen enthalten. Als Tenside vom Sulfonat-Typ kommen vorzugsweise C₉-C₁₃-Alkylbenzolsulfonate, Olefinsulfonate, das heißt Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse beziehungsweise Neutralisation gewonnen werden. Geeignet sind auch die Ester von α-Sulfofettsäuren (Estersulfonate), zum Beispiel die α-sulfonierten Methylester der hydrierten Kokos-, Palmkern- oder Talgfettsäuren, die durch α-Sulfonierung der Methylester von Fettsäuren pflanzlichen und/oder tierischen Ursprungs mit 8 bis 20 C-Atomen im Fettsäuremolekül und nachfolgende Neutralisation zu wasserlöslichen Mono-Salzen hergestellt werden, in Betracht. Vorzugsweise handelt es sich hierbei um die α-sulfonierten Ester der hydrierten Kokos-, Palm-, Palmkern- oder Talgfettsäuren, wobei auch Sulfonierungsprodukte von ungesättigten Fettsäuren, beispielsweise Ölsäure, in geringen Mengen, vorzugsweise in Mengen nicht oberhalb etwa 2 bis 3 Gew.-%, vorhanden sein können. Insbesondere sind α-Sulfofettsäurealkylester bevorzugt, die eine Alkylkette mit nicht mehr als 4 C-Atomen in der Estergruppe aufweisen, beispielsweise Methylester, Ethylester, Propylester und Butylester. Mit besonderem Vorteil werden die Methylester der α-Sulfofettsäuren (MES), aber auch deren verseifte Disalze eingesetzt. Weitere geeignete Aniontenside sind sulfierte Fettsäureglycerinester, welche Mono-, Di- und Triester sowie deren Gemische darstellen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden. Als Alk(en)ylsulfate werden die Alkali- und insbesondere die Natriumsalze der Schwefelsäurehalbester der C₁₂-C₁₈-Fettalkohole beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind C₁₂-C₁₆-Alkylsulfate und C₁₂-C₁₅-Alkylsulfate sowie C₁₄-C₁₅-Alkylsulfate insbesondere bevorzugt. Geeignet sind auch die Schwefelsäuremonoester der mit 1 bis 6 Mol Ethylenoxid ethoxylierten geradkettigen oder verzweigten C₇-C₂₁-Alkohole, wie 2-Methylverzweigte C₉-C₁₁-Alkohole mit im Durchschnitt 3,5 Mol Ethylenoxid (EO) oder C₁₂-C₁₈-Fettalkohole mit 1 bis 4 EO. Zu den bevorzugten Aniontensiden gehören auch die Salze der Alkylsulfobernsteinsäure, die auch als Sulfosuccinate oder als Sulfobernsteinsäureester bezeichnet werden, und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈- bis C₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen. Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen. Als weitere anionische Tenside kommen Fettsäure-Derivate von Aminosäuren, beispielsweise von N-Methyltaurin (Tauride) und/oder von N-Methylglycin (Sarkoside) in Betracht. Insbesondere bevorzugt sind dabei die Sarkoside beziehungsweise die Sarkosinate und hier vor allem Sarkosinate von höheren und gegebenenfalls einfach oder mehrfach ungesättigten Fettsäuren wie Oleylsarkosinat. Als weitere anionische Tenside kommen insbesondere Seifen in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, zum Beispiel Kokos-, Palmkern- oder Talgfettsäuren, abgeleitete Seifengemische. Zusammen mit diesen Seifen oder als Ersatzmittel für Seifen können auch die bekannten Alkenylbernsteinsäuresalze eingesetzt werden.

Die anionischen Tenside, einschließlich der Seifen, können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. Tenside sind in Waschmitteln in Mengenanteilen von normalerweise 1 Gew.-% bis 50 Gew.-%, insbesondere von 5 Gew.-% bis 30 Gew.-%, enthalten.

Ein Waschmittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Methylglycindiessigsäure, Nitrilotriessigsäure und Ethylendiamintetraessigsäure sowie Polyasparaginsäure, Polyphosphonsäuren, insbesondere Aminotris(methylenphosphonsäure), Ethylendiamintetrakis(methylenphosphonsäure) und 1-Hydroxyethan-1,1-diphosphonsäure, polymere Hydroxyverbindungen wie Dextrin sowie polymere (Poly-)carbonsäuren, insbesondere die durch Oxidation von Polysacchariden beziehungsweise Dextrinen zugänglichen Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättigter Carbonsäuren liegt im allgemeinen zwischen 3 000 g/mol und 200 000 g/mol, die der Copolymeren zwischen 2 000 g/mol und 200 000 g/mol, vorzugsweise 30 000 g/mol bis 120 000 g/mol, jeweils bezogen auf freie Säure. Ein besonders bevorzugtes Acrylsäure-Maleinsäure-Copolymer weist eine relative Molekülmasse von 30 000 g/mol bis 100 000 g/mol auf. Handelsübliche Produkte sind zum Beispiel Sokalan^{®} CP 5, CP 10 und PA 30 der Firma BASF. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder einem veresterten Vinylalkohol oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure, wobei Maleinsäure besonders bevorzugt ist, und/oder ein Derivat einer Allylsulfonsäure, die in 2-Stellung mit einem Alkyl- oder Arylrest substituiert ist, sein. Derartige Polymere weisen im Allgemeinen eine relative Molekülmasse zwischen 1 000 g/mol und 200 000 g/mol auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt.

Als wasserlösliche anorganische Buildermaterialien kommen insbesondere Alkalisilikate, Alkalicarbonate und Alkaliphosphate, die in Form ihrer alkalischen, neutralen oder sauren Natrium- oder Kaliumsalze vorliegen können, in Betracht. Beispiele hierfür sind Trinatriumphosphat, Tetranatriumdiphosphat, Dinatriumdihydrogendiphosphat, Pentanatriumtriphosphat, sogenanntes Natriumhexametaphosphat, oligomeres Trinatriumphosphat mit Oligomerisierungsgraden von 5 bis 1000, insbesondere 5 bis 50, sowie die entsprechenden Kaliumsalze beziehungsweise Gemische aus Natrium- und Kaliumsalzen. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, allein oder in Mischungen, beispielsweise in Form eines Co-Kristallisats aus den Zeolithen A und X (Vegobond^{®} AX, ein Handelsprodukt der Condea Augusta S.p.A.), bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen liegt in der Regel im Bereich von 100 bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · y H₂O eingesetzt, in der x, das sogenannte Modul, eine Zahl von 1,9 bis 22, insbesondere 1,9 bis 4 und y eine Zahl von 0 bis 33 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl ßals auch δ-Natriumdisilikate (Na₂Si₂O₅ · y H₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt. Kristalline Natriumsilikate mit einem Modul im Bereich von 1,9 bis 3,5 werden in einer weiteren bevorzugten Ausführungsform erfindungsgemäßer Mittel eingesetzt. Kristalline schichtförmige Silikate sind käuflich erwerbbar, z.B. Na-SKS-1 (Na₂Si₂₂O₄₅·xH₂O, Kenyait), Na-SKS-2 (Na₂Si₁₄O₂₉·xH₂O, Magadiit), Na-SKS-3 (Na₂Si₈O₁₇·xH₂O) oder Na-SKS-4 (Na₂Si₄O₉·xH₂O, Makatit). Von diesen eignen sich vor allem Na-SKS-5 (α-Na₂Si₂O₅), Na-SKS-7 (ß-Na₂Si₂O₅, Natrosilit), Na-SKS-9 (NaHSi₂O₅·3H₂O), Na-SKS-10 (NaHSi₂O₅·3H₂O, Kanemit), Na-SKS-11 (t-Na₂Si₂O₅) und Na-SKS-13 (NaHSi₂O₅), insbesondere aber Na-SKS-6 (δ-Na₂Si₂O₅). In einer bevorzugten Ausgestaltung erfindungsgemäßer Mittel setzt man ein granulares Compound aus kristallinem Schichtsilikat und Citrat, aus kristallinem Schichtsilikat und oben genannter (co-)polymerer Polycarbonsäure, oder aus Alkalisilikat und Alkalicarbonat ein, wie es beispielsweise unter dem Namen Nabion^{®} 15 im Handel erhältlich ist. Buildersubstanzen sind normalerweise in Mengen bis zu 75 Gew.-%, insbesondere 5 Gew.-% bis 50 enthalten.

Als für den Einsatz in Waschmitteln geeignete Persauerstoffverbindungen kommen insbesondere organische Persäuren beziehungsweise persaure Salze organischer Säuren, wie Phthalimidopercapronsäure, Perbenzoesäure oder Salze der Diperdodecandisäure, Wasserstoffperoxid und unter den Waschbedingungen Wasserstoffperoxid abgebende anorganische Salze, zu denen Perborat, Percarbonat, Persilikat und/oder Persulfat wie Caroat gehören, in Betracht. Sofern feste Persauerstoffverbindungen eingesetzt werden sollen, können diese in Form von Pulvern oder Granulaten verwendet werden, die auch in im Prinzip bekannter Weise umhüllt sein können. Falls ein erfindungsgemäßes Mittel Persauerstoffverbindungen enthält, sind diese in Mengen von vorzugsweise bis zu 50 - Gew.-%, insbesondere von 5 Gew.-% bis 30 Gew.-%, vorhanden. Der Zusatz geringer Mengen bekannter Bleichmittelstabilisatoren wie beispielsweise von Phosphonaten, Boraten beziehungsweise Metaboraten und Metasilikaten sowie Magnesiumsalzen wie Magnesiumsulfat kann zweckdienlich sein.

Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- oder iso-NOBS), Carbonsäureanhydride, insbesondere Phthalsäureanhydrid, acylierte mehrwertige Alkohole, insbesondere Triacetin, Ethylenglykoldiacetat, 2,5-Diacetoxy-2,5-dihydrofuran, Enolester sowie acetyliertes Sorbitol und Mannitol beziehungsweise deren Mischungen (SORMAN), acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton, und/oder N-acylierte Lactame, beispielsweise N-Benzoylcaprolactam. Die hydrophil substituierten Acylacetale und die Acyllactame werden ebenfalls bevorzugt eingesetzt. Auch Kombinationen konventioneller Bleichaktivatoren können eingesetzt werden. Derartige Bleichaktivatoren können, insbesondere bei Anwesenheit obengenannter Wasserstoffperoxid-liefernder Bleichmittel, im üblichen Mengenbereich, vorzugsweise in Mengen von 0,5 Gew.-% bis 10 Gew.-%, insbesondere 1 Gew.-% bis 8 Gew.-%, bezogen auf gesamtes Mittel, enthalten sein, fehlen bei Einsatz von Percarbonsäure als alleinigem Bleichmittel jedoch vorzugsweise ganz.

Zusätzlich zu den konventionellen Bleichaktivatoren oder an deren Stelle können auch Sulfonimine und/oder bleichverstärkende Übergangsmetallsalze beziehungsweise Übergangsmetallkomplexe als sogenannte Bleichkatalysatoren enthalten sein.

Als in den Mitteln verwendbare Enzyme kommen solche aus der Klasse der Amylasen, Proteasen, Lipasen, Cutinasen, Pullulanasen, Hemicellulasen, Cellulasen, Oxidasen, Laccasen und Peroxidasen sowie deren Gemische in Frage. Besonders geeignet sind aus Pilzen oder Bakterien, wie Bacillus subtilis, Bacillus licheniformis, Bacillus lentus, Streptomyces griseus, Humicola lanuginosa, Humicola insolens, Pseudomonas pseudoalcaligenes, Pseudomonas cepacia oder Coprinus cinereus gewonnene enzymatische Wirkstoffe. Die Enzyme können an Trägerstoffen adsorbiert und/oder in Hüllsubstanzen eingebettet sein, um sie gegen vorzeitige Inaktivierung zu schützen. Sie sind in den erfindungsgemäßen Wasch- oder Reinigungsmitteln vorzugsweise in Mengen bis zu 5 Gew.-%, insbesondere von 0,2 Gew.-% bis 4 Gew.-%, enthalten. Falls das erfindungsgemäße Mittel Protease enthält, weist es vorzugsweise eine proteolytische Aktivität im Bereich von etwa 100 PE/g bis etwa 10 000 PE/g, insbesondere 300 PE/g bis 8000 PE/g auf. Falls mehrere Enzyme in dem erfindungsgemäßen Mittel eingesetzt werden sollen, kann dies durch Einarbeitung der zwei oder mehreren separaten beziehungsweise in bekannter Weise separat konfektionierten Enzyme oder durch zwei oder mehrere gemeinsam in einem Granulat konfektionierte Enzyme durchgeführt werden.

Zu den in den Waschmitteln, insbesondere wenn sie in flüssiger oder pastöser Form vorliegen, neben Wasser verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Mitteln vorzugsweise in Mengen nicht über 30 Gew.-%, insbesondere von 6 Gew.-% bis 20 Gew.-%, vorhanden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln in Mengen von vorzugsweise nicht über 20 Gew.-%, insbesondere von 1,2 Gew.-% bis 17 Gew.-%, enthalten.

Vergrauungsinhibitoren haben die Aufgabe, den von der Textilfaserabgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Waschmittel können als optische Aufheller beispielsweise Derivate der Diaminostilbendisulfonsäure beziehungsweise deren Alkalimetallsalze enthalten, obgleich sie für den Einsatz als Colorwaschmittel vorzugsweise frei von optischen Aufhellern sind. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Insbesondere beim Einsatz in maschinellen Verfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

Die Herstellung fester Mittel bietet keine Schwierigkeiten und kann auf bekannte Weise, zum Beispiel durch Sprühtrocknen oder Granulation, erfolgen, wobei Enzyme und eventuelle weitere thermisch empfindliche Inhaltsstoffe wie zum Beispiel Bleichmittel gegebenenfalls später separat zugesetzt werden. Zur Herstellung von Mitteln mit erhöhtem Schüttgewicht, insbesondere im Bereich von 650 g/l bis 950 g/l, ist ein einen Extrusionsschritt aufweisendes Verfahren bevorzugt.

Zur Herstellung von Mitteln in Tablettenform, die einphasig oder mehrphasig, einfarbig oder mehrfarbig und insbesondere aus einer Schicht oder aus mehreren, insbesondere aus zwei Schichten bestehen können, geht man vorzugsweise derart vor, dass man alle Bestandteile - gegebenenfalls je einer Schicht - in einem Mischer miteinander vermischt und das Gemisch mittels herkömmlicher Tablettenpressen, beispielsweise Exzenterpressen oder Rundläuferpressen, mit Presskräften im Bereich von etwa 50 bis 100 kN, vorzugsweise bei 60 bis 70 kN verpresst. Insbesondere bei mehrschichtigen Tabletten kann es von Vorteil sein, wenn mindestens eine Schicht vorverpresst wird. Dies wird vorzugsweise bei Presskräften zwischen 5 und 20 kN, insbesondere bei 10 bis 15 kN durchgeführt. Man erhält so problemlos bruchfeste und dennoch unter Anwendungsbedingungen ausreichend schnell lösliche Tabletten mit Bruch- und Biegefestigkeiten von normalerweise 100 bis 200 N, bevorzugt jedoch über 150 N. Vorzugsweise weist eine derart hergestellte Tablette ein Gewicht von 10 g bis 50 g, insbesondere von 15 g bis 40 g auf. Die Raumform der Tabletten ist beliebig und kann rund, oval oder eckig sein, wobei auch Zwischenformen möglich sind. Ecken und Kanten sind vorteilhafterweise abgerundet. Runde Tabletten weisen vorzugsweise einen Durchmesser von 30 mm bis 40 mm auf. Insbesondere die Größe von eckig oder quaderförmig gestalteten Tabletten, welche überwiegend über die Dosiervorrichtung der Waschmaschine eingebracht werden, ist abhängig von der Geometrie und dem Volumen dieser Dosiervorrichtung. Beispielhaft bevorzugte Ausführungsformen weisen eine Grundfläche von (20 bis 30 mm) x (34 bis 40 mm), insbesondere von 26x36 mm oder von 24x38 mm auf.

Flüssige beziehungsweise pastöse Mittel in Form von übliche Lösungsmittel enthaltenden Lösungen werden in der Regel durch einfaches Mischen der Inhaltsstoffe, die in Substanz oder als Lösung in einen automatischen Mischer gegeben werden können, hergestellt.

### Beispiele

### Beispiel 1: a) Herstellung des ungesättigten Polyesters PE1

Eine Lösung von 13,14g Itaconsäure, 6,3g Ethylenglycol, 16,7 mg Hydrochinon und 48,5 mg p-Toluolsulfonsäure in 100ml Toluol wurde 30 Minuten auf 170°C erwärmt. Nach weiterem 4 stündigen Erhitzen unter vermindertem Druck, um das entstehende Reaktionswasser vollständig zu entfernen, wurde auf Raumtemperatur abgekühlt. Das erhaltenen viskose Öl wurde in Ethanol aufgeschlämmt und vom Bodensatz entfernt. Das Lösemittel wurde unter reduziertem Druck bei 40°C entfernt. Man erhielt 11 g PE1.
GPC in THF: Mₙ 2100 g/mol, M_{w} 4200 g/mol
¹NMR in DMSO-D₆: 6,2 ppm, 5,8 ppm (m, m, CH₂ der Doppelbindung), 4,2 -4,0 ppm (m, -O-CH₂-CH₂-O), 3,1 ppm (m -CO-CH₂-CO-).

### b) Herstellung eines Imidazol und Pyrrolidon funktionalisierten Polyesters (P1)

Eine Lösung von 2,2 g PE1, 0,9 g 1-(3-Aminopropyl)-imidazol und 1,1 g N-(3-Aminopropyl)-2-pyrrolidon in 10 ml trockenem Dimethylsulfoxid (DMSO) wurde für 3 Tage bei 100 °C gerührt. Nach Abkühlen auf Raumtemperaturwurde die Reaktionsmischung in 400 ml Diethylether gegossen, der sich bildende Niederschlag wurde abfiltriert und im Vakuumtrockenschrank getrocknet. Man erhielt 2,94 g P1.

¹NMR in DMSO-D₆: 7,6 ppm, 7,2 ppm, 6,9 ppm (s, s, s Imidazol Protonen), 4.0 - 3.0 ppm (m, O-C**H**₂-C**H**₂-O-, -CO-C**H**₂-C**H**-CO-, N-C**H**₂-CH₂-C**H**₂-N-, N-C**H**₂-CH₂-CH₂-CO des Pyrrolidons), 2,4 ppm (m, -N-C**H**₂-CH-), 2,1 ppm (m, N-CH₂-CH₂-C**H**₂-CO des Pyrrolidons), 1,8 ppm (m, -N-CH₂-C**H**₂-CH₂-N-Imidazol, N-CH₂-C**H**₂-CH₂-CO des Pyrrolidons), 1,6 ppm (m, -N-CH₂-C**H**₂-CH₂-N-Pyrrolidon).

4% der Doppelbindungen waren im Polymer noch vorhanden, und das Imidazol : Pyrrolidon Verhältnis lag bei 1:1, bestimmt durch ¹H NMR.

### Beispiel 2: Farbinhibierungsinhibierung

Der in der nachfolgenden Tabelle angegebene Farbgeber (gefärbtes Textil, das leicht Farbstoff abgibt) wurden in Gegenwart von weißem Baumwoll-Akzeptorgewebe (6cm x 16 cm; Wfk 11 A) bei 60°C 30 Minuten gewaschen. Danach wurde die Anfärbung des Baumwolltextils spektralphotometrisch bestimmt und nach ISO 105 A04 ausgewertet (SSR Noten auf einer Skala von 1 bis 5, 1 = starke Anfärbung, 5 = keine Anfärbung). Zum Einsatz kamen Waschflotten mit einem farbübertragungsinhibitorfreien wasserhaltigen Flüssigwaschmittel (F; Konzentration 3,5 g/l) oder mit der gleichen Menge eines ansonsten identisch zusammengesetzten Mittels, dem man unter Verminderung der Wassermenge das Polymer P1 zugesetzt hatte. Man erhielt folgende SSR-Noten (jeweils Mittelwert aus 2-fach - Bestimmung):

**Tabelle 1: Ergebnisse des Farbinhibierungsinhibierung**

| Farbgeber | F | F + P1 |
|---|---|---|
| Direct Red 83:1, EMPA | 2,9 | 4,3 |

Man erkennt, dass im Vergleich zum Waschmittel ohne Zusatz der erfindungswesentlichen polyesterbasierten Kammpolymere die weißen Textilien beim Waschen mit polyesterbasiertem Kammpolymer-Zusatz weniger stark angefärbt wurden.

## Patentansprüche

1. Verwendung von polyesterbasierten Kammpolymeren, erhältlich durch Aza-Michael-Addition von primären Aminen an Oligoester aus mono- oder diethylenisch ungesättigten Dicarbonsäuren und Diolen, zur Vermeidung der Übertragung von Textilfarbstoffen von gefärbten Textilien auf ungefärbte oder andersfarbige Textilien bei deren gemeinsamer Wäsche in insbesondere tensidhaltigen wässrigen Lösungen.

2. Verwendung von polyesterbasierten Kammpolymeren, erhältlich durch Aza-Michael-Addition von primären Aminen an Oligoester aus mono- oder diethylenisch ungesättigten Dicarbonsäuren und Diolen, zur Vermeidung der Veränderung des Farbeindrucks von gefärbten Textilien bei deren Wäsche in insbesondere tensidhaltigen wässrigen Lösungen.

3. Verfahren zum Waschen von weißen oder gefärbten Textilien in tensidhaltigen wässrigen Lösungen in Gegenwart von andersfarbigen Textilien, **dadurch gekennzeichnet, dass** man eine tensidhaltige wässrige Flotte einsetzt, die ein polyesterbasiertes Kammpolymer, erhältlich durch Aza-Michael-Addition von primären Aminen an Oligoester aus mono- oder diethylenisch ungesättigten Dicarbonsäuren und Diolen, enthält.

4. Verfahren nach Anspruch 3, **dadurch gekennzeichnet, dass** man 0,0003 g/l bis 0,16 g/l, insbesondere 0,0015 g/l bis 0,03 g/l des polyesterbasierten Kammpolymers in der wässrigen Flotte einsetzt.

5. Waschmittel, enthaltend Tensid sowie weitere übliche Inhaltsstoffe von Waschmitteln, **dadurch gekennzeichnet, dass** es ein polyesterbasiertes Kammpolymer, erhältlich durch Aza-Michael-Addition von primären Aminen an Oligoester aus mono- oder diethylenisch ungesättigten Dicarbonsäuren und Diolen, in farbübertragungsinhibierender Menge enthält,
wobei die weiteren üblichen Inhaltsstoffe von Waschmitteln ausgewählt sind aus Buildersubstanzen, oberflächenaktiven Tensiden, Bleichmitteln auf Basis organischer und/oder anorganischer Persauerstoffverbindungen, Bleichaktivatoren, wassermischbaren organischen Lösungsmitteln, Enzymen, Sequestrierungsmitteln, Elektrolyten, pH-Regulatoren optischen Aufhellern, Vergrauungsinhibitoren, Schaumregulatoren sowie Farb- und Duftstoffen und
wobei die Menge an polyesterbasiertem Kammpolymer von 0,01 Gew.-% bis 5 Gew.-%, bezogen auf das gesamte Waschmittel, beträgt.

6. Mittel nach Anspruch 5, **dadurch gekennzeichnet, dass** es das polyesterbasierte Kammpolymer in Mengen von 0,05 Gew.-% bis 1 Gew.-% enthält.

7. Mittel nach Anspruch 5 oder 6, **dadurch gekennzeichnet, dass** es zusätzlich einen weiteren Farbübertragungsinhibitor, ausgewählt aus den Polymeren aus Vinylpyrrolidon, Vinylimidazol, Vinylpyridin-N-Oxid oder den Copolymeren aus diesen, enthält.

8. Verwendung nach Anspruch 1 oder 2, Verfahren nach Anspruch 3 oder 4, oder Mittel nach einem der Ansprüche 5 bis 7, **dadurch gekennzeichnet, dass** die primären Amine aus solchen der allgemeinen Formel H₂N-R³-R⁴ ausgewählt werden, in denen R³ für -(CR¹R²)ₙ- steht, in denen unabhängig voneinander R¹ und R² für H oder einen C₁-C₁₂-Alkylrest und n für eine Zahl von 0 bis 10, vorzugsweise 1 bis 4, und R⁴ für einen Heterocyclus, insbesondere einen N-haltigen Heterocyclus, stehen.

9. Verwendung, Verfahren, oder Mittel nach Anspruch 8, **dadurch gekennzeichnet, dass** der Heterocyclus aus Pyrrolidon-, Imidazol- oder Pyridin-N-oxid und deren Mischungen ausgewählt werden.

10. Verwendung, Verfahren, oder Mittel nach einem der voranstehenden Ansprüche, **dadurch gekennzeichnet, dass** die mono- oder diethylenisch ungesättigten Dicarbonsäuren aus Maleinsäure, Fumarsäure, Itaconsäure, Mesaconsäure, Citraconsäure, Muconsäure und deren Mischungen ausgewählt werden; und/oder **dadurch gekennzeichnet, dass** die Diole aus denen der allgemeinen Formel HO-A-OH ausgewählt werden, in der A für -(CR¹R²)ₘ- oder - ((CR⁶R⁷)ₚ-O-(CR⁶R⁷)_{q})ₙ- steht, in denen unabhängig voneinander R¹ und R² für H oder einen C₁-C₁₂-Alkylrest, R⁶ und R⁷ für H oder einen C₁-C₃-Alkylrest, m für eine Zahl von 2 bis 10, n für eine Zahl von 1 bis 30 und unabhängig voneinander p und q für Zahlen von 2 bis 4 stehen, wobei m, n, p und q bei Einsatz von Diol-Mischungen auch nicht-ganzzahlige Werte aufweisen können und jeweils verschiedene R¹, R², R⁶ und R⁶ gemeinsam nebeneinander vorliegen können; und/oder **dadurch gekennzeichnet, dass** das polyesterbasierte Kammpolymer der allgemeinen Formel 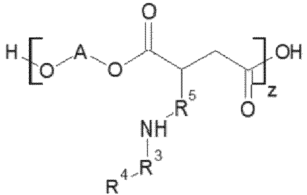 entspricht, in der R⁵ CH₂ oder eine direkte Bindung ist und z eine Zahl im Bereich von 2 bis 30 ist.

## Claims

1. Use of polyester-based comb polymers obtainable by Aza-Michael-addition of primary amines to oligoesters of mono- or diethylenically unsaturated dicarboxylic acids and diols, to prevent the transfer of textile dyes from dyed textiles to undyed or differently colored textiles when they are washed together, in particular in aqueous solutions containing surfactants.

2. Use of polyester-based comb polymers, obtainable by Aza-Michael-addition of primary amines to oligoesters of mono- or diethylenically unsaturated dicarboxylic acids and diols, for preventing changes in the color impression of dyed textiles when they are washed, in particular in aqueous solutions containing surfactants.

3. Method for washing white or dyed textiles in aqueous solutions containing surfactants in the presence of textiles of other colors, **characterized in that** an aqueous solution containing surfactants is used which contains a polyester-based comb polymer obtainable by Aza-Michael-addition of primary amines to oligoesters of mono- or diethylenically unsaturated dicarboxylic acids and diols.

4. Process according to claim 3, **characterized in that** 0.0003 g/l to 0.16 g/l, in particular 0.0015 g/l to 0.03 g/l of the polyester-based comb polymer is used in the aqueous liquor.

5. Detergent containing surfactant and other conventional detergent ingredients, **characterized in that** it contains a polyester-based comb polymer, obtainable by Aza-Michael-addition of primary amines to oligoesters of mono- or diethylenically unsaturated dicarboxylic acids and diols, in a color transfer-inhibiting amount,
wherein the other conventional ingredients of detergents are selected from builder substances, surface-active surfactants, bleaching agents based on organic and/or inorganic peroxygen compounds, bleach activators, water-miscible organic solvents, enzymes, sequestering agents, electrolytes, pH regulators, optical brighteners, gray inhibitors, foam regulators, and dyes and fragrances, and
wherein the amount of polyester-based comb polymer is from 0.01% by weight to 5% by weight, based on the total detergent.

6. Agent according to claim 5, **characterized in that** it contains the polyester-based comb polymer in amounts of 0.01 wt% to 5 wt%, in particular 0.05 wt% to 1 wt%.

7. Agent according to claim 5 or 6, **characterized in that** it additionally contains a further color transfer inhibitor selected from polymers of vinylpyrrolidone, vinylimidazole, vinylpyridine N-oxide or copolymers thereof.

8. Use according to claim 1 or 2, method according to claim 3 or 4, or agent according to one of claims 5 to 7, **characterized in that** the primary amines are selected from those of the general formula H₂N-R³-R⁴ in which R³ is -(CR¹R²)ₙ- in which, independently of one another, R¹ and R² represent H or a C₁ - C₁₂ alkyl radical and n represents a number from 0 to 10, preferably 1 to 4, and R⁴ represents a heterocycle, in particular an N-containing heterocycle.

9. Use, process, or agent according to claim 8, **characterized in that** the heterocycle is selected from pyrrolidone, imidazole, or pyridine N-oxide and mixtures thereof.

10. Use, method, or agent according to any of the preceding claims, **characterized in that** the mono- or diethylenically unsaturated dicarboxylic acids are selected from maleic acid, fumaric acid, itaconic acid, mesaconic acid, citraconic acid, muconic acid, and mixtures thereof; and/or **characterized in that** the diols are selected from the general formula HO-A-OH, wherein A is - (CR¹R²)ₘ₋or -((CR⁶R⁷)ₚ)-O-(CR⁶R⁷)_{q})ₙ, in which, independently of one another, R¹ and R² represent H or a C₁-C₁₂ alkyl radical, R⁶ and R⁷ represent H or a C₁-C₃ alkyl radical, m is a number from 2 to 10, n is a number from 1 to 30, and p and q are independently of one another numbers from 2 to 4, wherein m, n, p, and q may also have non-integer values when diol mixtures are used, and different R¹, R², R⁶ and R⁶ may be present together; and/or **characterized in that** is the polyester-based comb polymer of the general formula 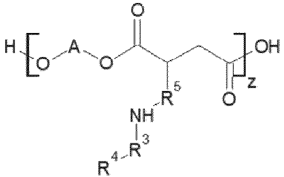 wherein R⁵ is CH₂ or a direct bond and z is a number in the range of 1 to 30.

## Revendications

1. Utilisation de polymères en peigne à base de polyester, pouvant être obtenus par addition Aza-Michael d'amines primaires sur des oligoesters d'acides dicarboxyliques et de diols mono- ou diéthyléniquement insaturés, pour éviter le transfert de colorants textiles de textiles teints vers des textiles non teints ou de couleur différente lors de leur lavage commun, en particulier dans des solutions aqueuses contenant des tensioactifs.

2. Utilisation de polymères en peigne à base de polyester, obtenus par addition Aza-Michael d'amines primaires sur des oligoesters d'acides dicarboxyliques et de diols mono- ou diéthyléniquement insaturés, pour éviter la modification de l'impression de couleur des textiles teints lors de leur lavage, en particulier dans des solutions aqueuses contenant des tensioactifs.

3. Procédé de lavage de textiles blancs ou colorés dans des solutions aqueuses contenant des tensioactifs en présence de textiles d'autres couleurs, **caractérisé en ce qu'**on utilise un bain aqueux contenant des tensioactifs, qui contient un polymère en peigne à base de polyester, pouvant être obtenu par addition d'Aza-Michael d'amines primaires à des oligoesters d'acides dicarboxyliques et de diols mono- ou diéthyléniquement insaturés.

4. Procédé selon la revendication 3, **caractérisé en ce que** l'on utilise 0,0003 g/l à 0,16 g/l, en particulier 0,0015 g/l à 0,03 g/l du polymère en peigne à base de polyester dans le bain aqueux.

5. Détergent contenant un tensioactif ainsi que d'autres ingrédients habituels des détergents, **caractérisé en ce qu'**il contient un polymère en peigne à base de polyester, pouvant être obtenu par addition d'Aza-Michael d'amines primaires sur des oligoesters d'acides dicarboxyliques et de diols mono- ou diéthyléniquement insaturés, en quantité inhibant le transfert de couleur,
les autres ingrédients habituels des détergents étant choisis parmi les adjuvants, les tensioactifs, les agents de blanchiment à base de composés peroxygénés organiques et/ou inorganiques, les activateurs de blanchiment, les solvants organiques miscibles à l'eau, les enzymes, les agents séquestrants, électrolytes, régulateurs de pH, azurants optiques, inhibiteurs de grisaillement, régulateurs de mousse, ainsi que des colorants et des parfums, et la quantité de polymère en peigne à base de polyester représentant de 0,01 % en poids à 5 % en poids par rapport à la composition détergente totale.

6. Agent selon la revendication 5, **caractérisé en ce qu'**il contient le polymère en peigne à base de polyester en quantités comprises entre 0,01 % et 5 % en poids, en particulier entre 0,05 % et 1 % en poids.

7. Agent selon la revendication 5 ou 6, **caractérisé en ce qu'**il contient en outre un autre inhibiteur de transfert de couleur choisi parmi les polymères de vinylpyrrolidone, de vinylimidazole, de vinylpyridine-N-oxyde ou les copolymères de ceux-ci.

8. Utilisation selon la revendication 1 ou 2, procédé selon la revendication 3 ou 4, ou agent selon l'une des revendications 5 à 7, **caractérisé en ce que** les amines primaires sont choisies parmi celles de formule générale H₂N-R³-R⁴ dans laquelle R³ représente -(CR¹R²)ₙ- dans lesquelles, indépendamment l'un de l'autre, R¹ et R² représentent H ou un radical alkyle en C₁ - C₁₂ et n représente un nombre de 0 à 10, de préférence de 1 à 4, et R⁴ représente un hétérocycle, en particulier un hétérocycle contenant de l'azote.

9. Utilisation, procédé ou agent selon la revendication 8, **caractérisé en ce que** l'hétérocycle est choisi parmi les pyrrolidone, imidazole ou pyridine N-oxyde et leurs mélanges.

10. Utilisation, procédé ou agent selon l'une des revendications précédentes, **caractérisés en ce que** les acides dicarboxyliques mono- ou diéthyléniquement insaturés sont choisis parmi l'acide maléique, l'acide fumarique, l'acide itaconique, l'acide mésaconique, l' acide citraconique, acide muconique et leurs mélanges ; et/ou **caractérisés en ce que** les diols sont choisis parmi ceux de formule générale HO-A-OH, dans laquelle A représente -(CR¹R²)ₘ₋or -((CR⁶R⁷)ₚ-O-(CR⁶R⁷)_{q})ₙ, dans lesquels, indépendamment l'un de l'autre, R¹ et R² représentent H ou un radical alkyle en C₁-C₁₂, R⁶ et R⁷ représentent H ou un radical alkyle en C₁-C₃, m représente un nombre de 2 à 10, n représente un nombre de 1 à 30 et, indépendamment l'un de l'autre, p et q représentent des nombres de 2 à 4, m, n, p et q pouvant également présenter des valeurs non entières en cas d'utilisation de mélanges de diols, et différents R¹ , R², R⁶ et R⁶ peuvent être présents ensemble côte à côte ; et/ou **caractérisé en ce que** est le polymère en peigne à base de polyester de formule générale 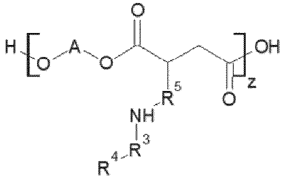 dans laquelle R⁵ est CH₂ ou une liaison directe et z est un nombre compris entre 1 et 30.
